# EUROPEAN PATENT SPECIFICATION

(11) **EP 1 661 671 B1**
(45) Date of publication and mention of the grant of the patent: **26.03.2008**
(21) Application number: 05024915.0
(22) Date of filing: 15.11.2005
(51) Int. Cl.: B25J 19/00

(54) **Robot with managing device for an umbilical member**
Roboter mit Führungsvorrichtung für eine Versorgungsleitung
Robot avec dispositif de guidage pour un câble ombilical

(30) Priority: 29.11.2004 JP 2004344008
(43) Date of publication of application: 31.05.2006
(73) Proprietor: Fanuc Ltd, Minamitsuru-gun, Yamanashi 401-0597 (JP)
(72) Inventor: Kidooka, Akio, Ashigarakami-gun Kanagawa 258-0017 (JP); Morioka, Masahiro Fanuc Dai3virakaramatsu, Minamitsuru-gun Yamanashi 401-0511 (JP)
(74) Representative: Thum, Bernhard

(56) References cited:
- EP-A- 1 060 057
- DE-A1- 10 158 741
- US-A- 5 437 207

## Description

### BACKGROUND ART

### 1. Technical Field

The present invention relates to a robot having a managing device for an umbilical member including a cable and/or a tube of the robot.

### 2. Description of the Related Art

Generally, when an industrial robot is used for an operation, the robot is required to be provided with an umbilical member including a cable and/or a tube for transmitting power or a signal to an end effector attached to the end of a wrist element of the robot. When the umbilical member is arranged around the wrist element of a robot arm, the umbilical member may contact the arm or the other external equipment and may be worn or damaged. In order to avoid such an inconvenience, several configurations has been proposed.

For example, Patent Publication No. EP1060057 discloses a configuration in which a flexible conduit, containing a cable and a tube, is arranged along a forearm of a robot, by means of a holding means arranged on the forearm, and slidably holds the conduit.

In the configuration disclosed in the above publication, as the holding means is positioned at generally a center of an upper surface of the forearm, it is difficult to closely fit the holding means to the forearm. Therefore, there is a gap between the conduit and the forearm, resulting in that an interference area of the forearm may be enlarged. When an angle between the sliding direction of the conduit at the holding means and the longitudinal direction of the forearm direction is relatively small, the conduit wound around the forearm cannot be unwound due to the large sliding resistance, as the direction of movement or contraction of the conduit is different from the sliding direction of the conduit at the holding means. Therefore, in the configuration disclosed on the above publication, it is necessary to arrange an auxiliary element such as a spring on the part of the conduit for facilitating the sliding motion of the conduit at the holding means, in order to avoid the occurrence of an excess length, or a slack, in the conduit.

US 5,437,207 discloses a multiaxial manipulator in which supply lines for a tool connected to a robot with a rocker, a jib and a hand are guided in an external guide section. The external guide section is supported by line holders, one of which is arranged on a spring-load arm on the forearm.

WO-A- 99 44 792 and DE-A-101 58 741 disclose further robots provided with a spring element acting on an umbilical member for positioning glach generated by the rotation of the wrist element behind the forearm of the robot.

### SUMMARY OF THE INVENTION

Therefore, an object of the present invention is to provide a robot having a managing device for an umbilical member having a simple structure, by which an interference region of the conduit is reduced as much as possible and an undesirable excess length of the conduit may be avoided without using the above spring, or the like.

Concretely, according to the present invention, there is provided a robot having a managing device for supporting an umbilical member corresponding to the motion of the robot, the robot having: an upper arm; a forearm movably connected to the upper arm via a joint; a wrist element rotatably mounted to the end of the forearm; an end effector attached to the wrist element; and a flexible umbilical member connected the end effector, wherein the managing device comprises: a first supporting member, mounted on the upper arm, for fixing or twistably supporting the umbilical member; a holding member, mounted on the forearm adjacent to the joint, for holding the umbilical member such that the umbilical member may slide relative to the holding member and may rotate about axes along and perpendicular to the sliding direction of the umbilical member; and a second supporting member, mounted on the wrist element so as to integrally rotate with the wrist element, for fixing or twistably supporting the umbilical member; wherein the first and second supporting members and the holding member are positioned such that a slack of the umbilical member generated by the rotation of the wrist element is positioned between the first supporting member and the holding member without the use of an auxiliary means such as a spring for facilitating the sliding motion of the umbilical member relative to the holding member.

The holding member is preferably positioned near the joint such that the slack of the umbilical member is positioned around the joint.

The managing device may further comprise a means for reducing the sliding resistance between the forearm and the umbilical member.

The means for reducing the sliding resistance may be a protrusion arranged on a site of forearm abutting the umbilical member. Alternatively, the means for reducing the sliding resistance may be a protrusion arranged on a site of the umbilical member abutting the forearm. In both cases, the protrusion may be a ring member.

### BRIEF DESCRIPTION OF THE DRAWINGS

The above and other objects, features and advantages of the present invention will be made more apparent from the following description of the preferred embodiments thereof, with reference to the accompanying drawings, wherein:
Figs. 1a and 1b are a top view and a right-side view, respectively, of a total configuration including a managing device of the invention, each indicating from an upper arm to an end effector of a robot;
Figs. 2a to 2c are a top view, a left-side view and a right-side view, respectively, of the configuration of Figs. 1a and 1b in which a wrist element of the robot rotates; and
Fig. 3 is a view similar to Fig. 1a, indicating another embodiment of a ring member.

### DETAILED DESCRIPTION

Embodiments of the invention will be described with reference to the drawings.

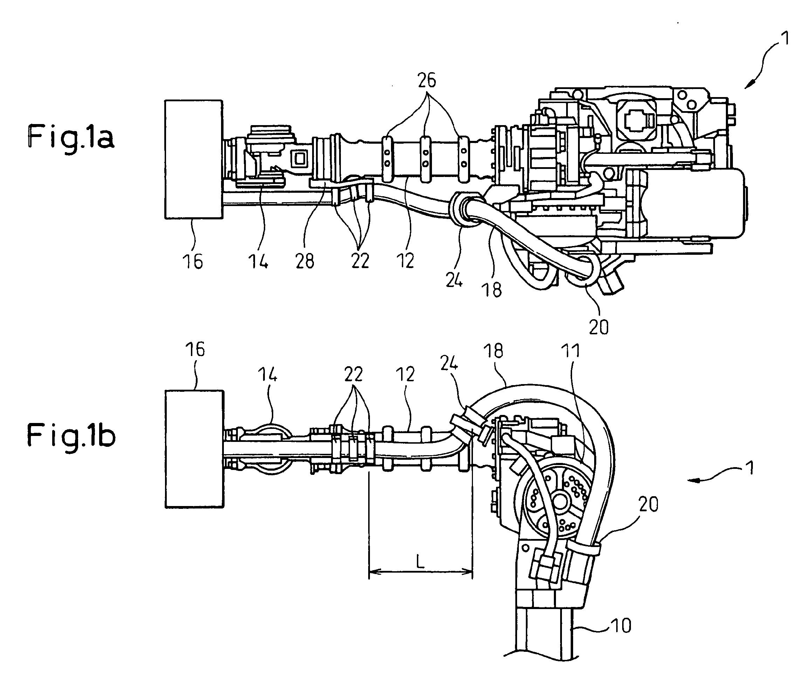

Figs. 1a and 1b show a total configuration of a managing device of the invention, each showing a robot from an upper arm to an end effector. A robot 1 includes an upper arm 10; a forearm 12 movably connected to the upper arm 10 via a joint 11; a wrist element 14 rotatably mounted to the end of the forearm 12; and an end effector 16 attached to the wrist element 14. Power and a signal are sent to the end effector 16 by means of an umbilical member 18 constituted by a flexible conduit through which a cable and a tube extend. The umbilical member 18 is arranged along a base (not shown) of the robot 1, the upper arm 10, the forearm 12 and the wrist element 14 and connected to the end effector 16.

As shown in Figs. 1a and 1b, a first supporting member or a conduit supporting member 20 is arranged on the upper arm 10, and a second supporting member or a conduit supporting member 22 is arranged on the wrist element 14. The umbilical member or the conduit 18 is fixed or twistably supported by the first and second supporting members 20 and 22. Further, the conduit 18 is held by a holding means 24 arranged between the first and second supporting members 20 and 22 and, in particular, adjacent to the side of the forearm 12 and preferably near the joint 11, such that the conduit 18 may slide relative to the holding member 24 and may rotate about axes along and perpendicular to the sliding direction of the conduit. The holding member 24 has, for example, a ring shape as shown. Preferably, the holding member 24 is positioned at a site on the forearm 12 close to the joint 11 as possible (for example, a proximal end of the forearm 12). Due to this configuration, a gap between the conduit 18 and the forearm 12 is reduced, thereby the possibility of interference between the conduit and an external equipment may be minimized. In a first state, as shown in Figs. 1a and 1b, in which the conduit 18 is not wound around the forearm 12, the conduit 18 between the first supporting member 20 and the holding member 24 (in particular, near the joint 11) has an excess length or a slack of the conduit.

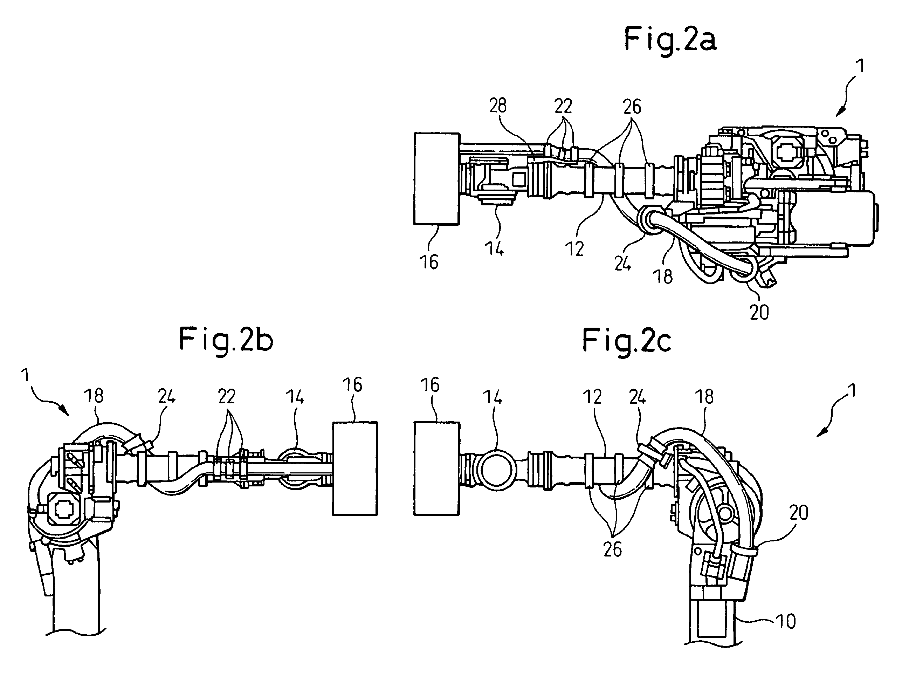

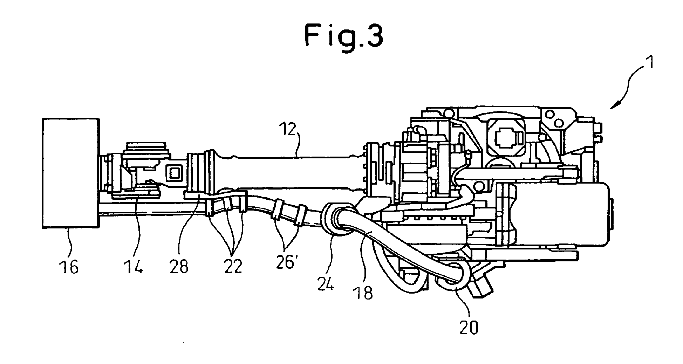

Figs. 2a to 2c show a second state, in which the conduit 18 is wound around the forearm 12 by the rotation of the wrist element 14. When the wrist element 14 rotates, the second supporting member 22 is also rotated by the rotation of the wrist element 14. Therefore, the conduit 18 is drawn toward the end effector 16 and slides relative to the holding member 24 to some extent. Further, the conduit 18 is wound on to the forearm 12 between the first and second supporting members 20 and 22. Therefore, the conduit 18 is as close to the forearm 12 as possible and the possibility of interference between the conduit and the external equipment may be remarkably reduced. In addition, in order to make the motion of the conduit smoother, a protrusion (for example, a ring member 26 as shown) may be arranged on a peripheral surface of the forearm 12. Due to the protrusion, a contact area between the conduit 18 and the peripheral surface of the forearm 12 may be zero or reduced, whereby a frictional force or a sliding resistance acting on the conduit 18 being wounded on to the forearm 12 is remarkably reduced. Instead of the ring member 26 for reducing the contact area, a protrusion (for example, a ring member 26' similar to the ring member 26), as shown in Fig. 3, may be arranged on the conduit 18, not on the forearm 12.

However, when the wrist element 14 rotates from the second state to the first state, the conduit 18 between the conduit supporting members 20 and 22 is unwounded from the forearm 12. As the device of Patent Publication No. EP1060057 does not have a member corresponding to the second supporting member 22 of the present invention, the unwounded conduit may be apart from the forearm and hang down such that the conduit undesirably sags. Therefore, in the device of the publication, it may be necessary to provide a spring or the like so as to absorb the sag. In the present invention, on the other hand, as the sag of the conduit or the separation of the conduit from the forearm is avoided by the second supporting member 22, the longitudinal direction of the excess length part of the conduit 18, in the first state, generated by the sliding motion of the conduit relative to the holding member 24 toward the end effector 16 may be kept to be almost the same as the sliding direction of the conduit at the holding member 24. Therefore, when the wrist element 14 rotates such that the conduit 18 is unwounded from the forearm 12, the conduit 18 may smoothly slide, at the holding member 24, toward the upper arm 10, without using an auxiliary means such as a spring. As described above, by means of the holding means 24 positioned near the joint 11, the conduit 18 in the second state may be fitted to the forearm 12 over the whole length thereof, whereby an interference region of the conduit may be minimized. Further, advantageously, the excess length of the conduit 18 may be generated around the joint 11 where interference does not need to be taken into consideration.

By a suitable orientation or an angle of the holding member or the ring 24, the motion of the conduit 18 may be made more smooth. The preferable angle of the holding member 24 may vary according to the dimension and the material of the conduit 18 and the size of the forearm. In many cases, it is preferable that an angle between the longitudinal direction of the conduit 18 at the holding member 24 and the longitudinal direction of the forearm 12 is within a range of 20 - 70 degree.

It greatly depends on a distance L between the second supporting member 22 on the wrist element 14 and the holding member 24 (as shown in Fig. 1b), whether the conduit 18 may smoothly slide relative to the holding member 24 toward the upper arm (i.e., from the second state to the first state). Therefore, if the length of the forearm 12 is relatively long, as shown in Fig. 1a or 2a, the second supporting member 22 is preferably displaced toward the forearm 12 to some extent by means of a bracket 28 attached to the wrist element 14, so as to suitably shorten the distance L corresponding to the dimension and the material of the conduit 18.

According to the invention, the excess length or the slack of the umbilical member generated by the rotation of the wrist element is positioned between the first supporting member and the holding member. Therefore, an excess length is not generated around the forearm where interference may cause a problem.

While the invention has been described with reference to specific embodiments chosen for the purpose of illustration, it should be apparent that numerous modifications could be made thereto, by one skilled in the art, without departing from the scope of the invention as defined in the appended claims.

## Claims

1. A robot having a managing device for supporting an umbilical member (18) corresponding to the motion of the robot (1), the robot having:
an upper arm (10);
a forearm (12) movably connected to the upper arm (10) via a joint (11);
a wrist element (14) rotatably mounted to the end of the forearm (12);
an end effector (16) attached to the wrist element (14); and
a flexible umbilical member (18) connected to the end effector (16)
wherein the managing device comprises:
a first supporting member (20), mounted on the upper arm (10), for fixing or twistably supporting the umbilical member (18);
a holding member (24), mounted on the forearm (12) adjacent to the joint (11), for holding the umbilical member (18) such that the umbilical member (18) may slide relative to the holding member (24) and may rotate about axes along and perpendicular to the sliding direction of the umbilical member (18);
and a second supporting member (22), mounted on the wrist element (14) so as to integrally rotate with the wrist element (14), for fixing or twistably supporting the umbilical member (18);
wherein the first and second supporting members (20, 22) and the holding member (24) are positioned such that a slack of the umbilical member (18) generated by the rotation of the wrist element (14) is positioned between the first supporting member (20) and the holding member (24) without the use of an auxiliary means such as a spring for facilitating the sliding motion of the umbilical member (18) relative to the holding member (24).

2. The robot as set forth in claim 1, wherein the holding member (24) is positioned near the joint (11) such that the slack of the umbilical member (18) is positioned around the joint (11).

3. The robot as set forth in claim 1, further comprising a means (26, 26') for reducing the sliding resistance between the forearm (12) and the umbilical member (18).

4. The robot as set forth in claim 3, wherein the means (26) for reducing the sliding resistance is a protrusion (26) arranged on a site of forearm (12) abutting the umbilical member (18).

5. The robot as set forth in claim 4, wherein the protrusion (26) is a ring member (26).

6. The robot as set forth in claim 3, wherein the means (26') for reducing the sliding resistance is a protrusion (26') arranged on a site of the umbilical member (18) abutting the forearm (12).

7. The robot as set forth in claim 6, wherein the protrusion (26') is a ring member (26').

## Patentansprüche

1. Roboter mit einer Handhabungsvorrichtung zum Lagern eines Versorgungselements (18) entsprechend der Bewegung des Roboters (1), wobei der Roboter umfasst:
einen oberen Arm (10),
einen bewegbar über ein Gelenk (11) mit dem oberen Arm (10) verbundenen Unterarm (12);
ein rotierbar an dem Ende des Unterarms (12) angebrachtes Gelenkelement (14);
einen an dem Gelenkelement (14) angebrachten Endaktuator (16); und
ein mit dem Endaktuator (16) verbundenes flexibles Versorgungselement (18),
wobei die Handhabungsvorrichtung umfasst:
ein erstes Lagerelement (20) zum Fixieren oder verwindungsfähigen Lagern des Versorgungselements (18), das auf dem oberen Arm (10) angebracht ist;
ein auf dem Unterarm (12) nahe dem Gelenk (11) angebrachtes Halteelement (24) zum Halten des Versorgungselements (18) derart, dass das Versorgungselement (18) sich relativ zu dem Halteelement (24) verschieben kann und um Achsen entlang und orthogonal zu der Verschieberichtung des Versorgungselements (18) rotieren kann;
und ein zweites Lagerelement (22) zum Fixieren oder verwindungsfähigen Lagern des Versorgungselements (18), das an dem Gelenkelement (14) derart angebracht ist, dass es integral mit dem Gelenkelement (14) rotiert;
wobei die ersten und zweiten Lagerelemente (20, 22) und das Halteelement (24) derart angeordnet sind, dass ein durch die Rotation des Gelenkelements (14) erzeugter Durchhang des Versorgungselements (18) ohne das Verwenden eines Hilfsmittels wie eine Feder zum Ermöglichen der Verschiebebewegung des Versorgungselements (18) relativ zu dem Halteelement (24) zwischen dem ersten Lagerelement (20) und dem Halteelement (24) angeordnet ist.

2. Roboter nach Anspruch 1, wobei das Halteelement (24) nahe dem Gelenk (11) angeordnet ist, so dass der Durchhang des Versorgungselements (18) um das Gelenk (11) angeordnet ist.

3. Roboter nach Anspruch 1, ferner umfassend ein Mittel (26, 26') zum Verringern des Verschiebewiderstands zwischen dem Unterarm (12) und dem Versorgungselement (18).

4. Roboter nach Anspruch 3, wobei das Mittel (26) zum Verringern des Verschiebewiderstands ein an einer an das Versorgungselement (18) angrenzenden Stelle des Unterarms (12) angeordneter Vorsprung (26) ist.

5. Roboter nach Anspruch 4, wobei der Vorsprung (26) ein Ringelement (26) ist.

6. Roboter nach Anspruch 3, wobei das Mittel (26') zum Verringern des Verschiebewiderstands ein an einer an den Unterarm (12) angrenzenden Stelle des Versorgungselements (18) angeordneter Vorsprung (26') ist.

7. Roboter nach Anspruch 6, wobei der Vorsprung (26') ein Ringelement (26') ist.

## Revendications

1. Robot comportant un dispositif de maniement destiné à porter un élément ombilical (18) correspondant au mouvement du robot, le robot possédant :
un bras supérieur (10) ;
un avant-bras (12) relié de manière mobile au bras supérieur (10) par l'intermédiaire d'une articulation (11) ;
un élément de poignet (14) monté avec possibilité de rotation à l'extrémité de l'avant-bras (12) ;
un organe terminal effecteur (16) fixé à l'élément de poignet (14) ; et
un élément ombilical souple (18) relié à l'organe terminal effecteur (16),
dans lequel le dispositif de maniement comprend :
un premier élément de support (20) monté sur le bras supérieur (10) destiné à fixer ou à porter avec possibilité de rotation l'élément ombilical (18) ;
un élément de maintien (24) monté sur l'avant-bras (12) de manière adjacente à l'articulation (11), destiné à maintenir l'élément ombilical (18) de manière à ce que l'élément ombilical (18) puisse glisser par rapport à l'élément de maintien (24) et puisse tourner autour des axes selon la direction de glissement de l'élément ombilical (18) et perpendiculairement à celle-ci ;
et un deuxième élément de support (22) monté sur l'élément de poignet (14) de manière à tourner d'une seule pièce avec l'élément de poignet (14), de manière à fixer ou à porter avec possibilité de rotation l'élément ombilical (18) ;
dans lequel les premier et deuxième éléments de support (20, 22) et l'élément de maintien (24) sont positionnés de manière à ce qu'un desserrage de l'élément ombilical (18) généré par la rotation de l'élément de poignet (14) soit positionné entre le premier élément de support (20) et l'élément de maintien (24), sans utilisation d'un moyen auxiliaire tel qu'un ressort pour faciliter le mouvement de glissement de l'élément ombilical (18) par rapport à l'élément de maintien (24).

2. Robot selon la revendication 1, dans lequel l'élément de maintien (24) est positionné près de l'articulation (11), de manière à ce que le desserrage de l'élément ombilical (18) soit positionné au voisinage de l'articulation (11).

3. Robot selon la revendication 1, comprenant en outre un moyen (26, 26') destiné à réduire la résistance au glissement entre l'avant-bras (12) et l'élément ombilical (18).

4. Robot selon la revendication 3, dans lequel le moyen (26) destiné à réduire la résistance au glissement est une saillie (26) agencée sur un site de l'avant-bras (12) en butée sur l'élément ombilical (18).

5. Robot selon la revendication 4, dans lequel la saillie (26) est un élément annulaire (26).

6. Robot selon la revendication 3, dans lequel le moyen (26) destiné à réduire la résistance au glissement est une saillie (26') agencée sur un site de l'élément ombilical (18) en butée sur l'avant-bras (12).

7. Robot selon la revendication 6, dans lequel la saillie (26) est un élément annulaire (26').
